# EUROPÄISCHE PATENTSCHRIFT

(11) **EP 2 497 412 B1**
(45) Veröffentlichungstag und Bekanntmachung des Hinweises auf die Patenterteilung: **05.10.2016**
(21) Anmeldenummer: 12001221.6
(22) Anmeldetag: 24.02.2012
(51) Int. Cl.: G01N 21/64, G06T 5/50, G02B 21/00

(54) **Laser-Scanning-Mikroskop und Verfahren zu seinem Betrieb**
Laser scanning microscope and method for operation of the same
Microscope à balayage laser et son procédé de fonctionnement

(30) Priorität: 08.03.2011 DE 102011013614
(43) Veröffentlichungstag der Anmeldung: 12.09.2012
(73) Patentinhaber: Carl Zeiss Microscopy GmbH, 07745 Jena (DE)
(72) Erfinder: Langholz, Nils, 99510 Apolda (DE); Huhse, Dieter, 12167 Berlin (DE)
(74) Vertreter: Hampe, Holger

(56) Entgegenhaltungen:
- EP-A1- 1 870 029
- WO-A1-00/55572
- WO-A1-2005/006255
- WO-A2-2010/146134
- DE-A1-102004 034 977
- US-A1- 2009 263 002

## Beschreibung

### Problemstellung

Aus EP1870029A1 ist es beispielsweise bekannt, mittels einer OCT - Messanordnung eine zweidimensionale horizontale Bildabtastung in mehreren Höhenpositionen durchzuführen und dadurch in mindestens zwei Detektionskanälen das Probenlicht zu detektieren.

Material- und BioMed-Proben haben häufig hohe Kontrastverhältnisse.
Diese hohen Kontrastverhältnisse können beispielsweise mit dem ZEISS - LSM700 mit einer einzelnen Messung nicht abgedeckt werden. Dafür gibt es HDR-Verfahren (High-Dynamic-Range), bei denen das Messergebnis aus mehreren einzelnen Messungen mit verschiedenen Beleuchtungsstärken oder Detektorempfindlichkeiten (PMT-Gain) zusammengesetzt wird. Die Messungen erfolgen jedoch nacheinander, was zu den folgenden Problemen führt.

### Im Material Bereich (Topographiebestimmung):

- Lange Messzeiten. Da mindestens eine doppelte Abtastung notwendig ist, verdoppelt sich zumindest die Messzeit.
- Die Gefahr, dass in den einzelnen Messungen nicht exakt die gleichen Messpunkte abgetastet werden, z.B. durch Schwingungen und nicht exakt laufenden Scannern.
- Errechnete Höhenwerte, die auf Auswertung einer PSF mit einer geringen Intensität beruhen, zeigen in der Regel ein höheres Rauschverhalten.

### Im BioMed Bereich:

- Lange Messzeiten. Da mindestens eine doppelte Abtastung notwendig ist, verdoppelt sich zumindest die Messzeit.
- Gefahr, dass in den einzelnen Messungen nicht exakt die gleichen Messpunkte abgetastet werden, z.B. durch Schwingungen und nicht exakt laufenden Scannern.
- Durch die doppelte Abtastung wird die Probe stärker belastet, was zu einer Bleichung der Probe führen kann.
- Bei der Beobachtung von lebenden Zellen kann es zwischen den Einzelmessungen zu einer Veränderung der Zellen, also der Probe, kommen. D.h. die Kombination von Lebendzellbeobachtung und HDR ist mit den derzeitigen Verfahren nur bedingt sinnvoll.
- Bei den gängigen Verfahren werden mehrere Messungen nacheinander gemacht und dann verrechnet. Teilweise sind die Einzelmessungen zu einem Messablauf zusammengefasst, der nach außen wie eine Einzelmessung wirkt. Zwischen den Teilmessungen werden dann optische Elemente wie Spiegel-Arrays oder Sensorparameter verändert.
- Es gibt für HDR-Kameras spezielle Kamerachips die einen höheren Dynamikbereich erfassen können. Diese sind allerdings nicht als Ersatz für die PMTs geeignet.

Auf einem anderen Gebiet, der Ophthalmologie (DE102007046210A1) wird ein Fundusbild mit erweiterter Dynamik mittels eines Strahlteilers mit asymmetrischem Teilungsverhältnis und mehreren Bildsensoren erzeugt.

Die Aufgabe die obengenannten Probleme zu beseitigen, das heisst die Messgenauigkeit bekannter Messverfahren in der Laser- Scanning-Mikroskopie zu verbessern und ihre Fehleranfälligkeit zu verringern, wird durch eine Anordnung und ein Verfahren gemäß den unabhängigen Patentansprüchen gelöst.
Bevorzugte Weiterbildungen sind Gegenstand der abhängigen Patentansprüche.

Die Erfindung bewirkt mehrere überraschende Verbesserungen gegenüber dem Stand der Technik:
- Es kann ein Farbneutralteiler mit einem hohen Teilungsverhältnis wie 1000:1 oder 100:1 verwendet werden. Dadurch kann ein wesentlich höherer Intensitätsdynamikbereich erfasst werden.
- Es kann auch ein Farbneutralteiler verwendet werden, der nicht wesentlich von 50:50 abweicht. In diesem Fall steht zur Kontrasterhöhung nur der Gain (Verstärkung) zur Verfügung.
- Es müssen nicht nur zwei Sensoren sein. Mit weiteren Strahlteilungen können weitere Sensoren angeschlossen werden, entweder um eine Spektralzerlegung nachzuschalten oder zur weiteren Aufweitung des Dynamikbereiches.
- Es müssen keine PMTs als Sensoren verwendet werden. Im Prinzip können alle lichtempfindlichen Sensoren Z.B. auch CCD- oder CMOS-Chips verwendet werden.
- Die Messeinstellung müssen nicht per Hand vorgenommen werden, es kann auch eine Automatisierung bzw. Teilautomatisierung der Messbedingungen realisiert werden.
- Die Messeinstellung müssen nicht per Hand vorgenommen werden, es kann auch eine Automatisierung bzw. Teilautomatisierung der Messbedingungen realisiert werden.

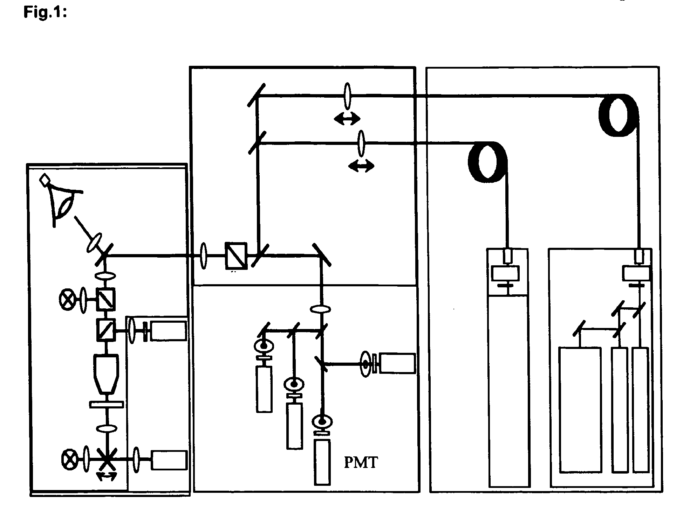

In Fig. 1 ist schematisch ein Strahlengang eines Laser-Scanning-Mikroskopes dargestellt.
Ein LSM gliedert sich im Wesentlichen wie in Fig. 1 dargestellt in mehrere Module: Lichtquelle, Scanmodul, Detektionseinheit und Mikroskop. Diese Module werden im Folgenden näher beschrieben. Es wird zusätzlich auf DE19702753A1 verwiesen die als Referenz in die Offenbarung einbezogen wird.
Im LSM werden Laser mit verschiedenen Wellenlängen im Lichtquellenmodul eingesetzt. Zum Einsatz kommen hierbei verschiedene Laser (Argon, Argon Krypton, TiSa-Laser). Weiterhin erfolgt im Lichtquellenmodul die Selektion der Wellenlängen und die Einstellung der Intensität der benötigten Anregungswellenlänge, z.B. durch den Einsatz eines akusto -optischen Kristalls (AOTF). Anschließend gelangt die Laserstrahlung über eine Faser oder eine geeignete Spiegelanordnung in das Scanmodul.
Die in der Lichtquelle erzeugte Laserstrahlung wird mit Hilfe des Objektivs beugungsbegrenzt über die Scanner, die Scanoptik und die Tubuslinse in das Präparat fokussiert. Der Fokus rastert punktförmig die Probe in x-y-Richtung ab. Die Pixelverweilzeiten beim Scannen über die Probe liegen meist im Bereich von weniger als einer Mikrosekunde bis zu einigen 100 Mikrosekunden.
Bei einer konfokalen Detektion gelangt das Licht das aus der Fokusebene und aus den darüber- und darunterliegenden Ebenen emittiert wird, über die Scanner auf einen dichroitischen Strahlteiler. Dieser trennt das Probenlicht vom Anregungslicht. Anschließend wird das Probenlicht auf eine Blende (konfokale Blende / Pinhole) fokussiert, die sich genau in einer zur Fokusebene konjugierten Ebene befindet. Dadurch werden Lichtanteile außerhalb des Fokus unterdrückt. Durch Variieren der Blendengröße kann die optische Auflösung des Mikroskops eingestellt werden. Hinter der Blende befindet sich meist ein weiterer dichroitischer Blockfilter der nochmals die Beleuchtungsstrahlung unterdrückt. Nach Passieren des Blockfilters wird das Probenlicht mittels eines Punktdetektors (meist ein PMT) gemessen.

Durch die Aufzeichnung mehrerer optische Schnitte in der x-y Ebene in verschiedenen Tiefen z der Probe kann rechnergestützt ein dreidimensionales Bild der Probe generiert werden.
Das LSM ist somit zur Untersuchung von dicken Präparaten geeignet.

In biomedizinischen Applikationen werden mehrere verschiedene Zellregionen mit verschiedenen Farbstoffe gleichzeitig markiert (Multifluoreszenz). Die einzelnen Farbstoffe können mit den Stand der Technik entweder aufgrund verschiedener Absorptionseigenschaften oder Emissionseigenschaften (Spektren) getrennt nachgewiesen werden. Dazu erfolgt eine zusätzliche Aufspaltung des Fluoreszenzlichts von mehreren Farbstoffen mit den Nebenstrahlteilem (DBS) und eine getrennte Detektion der einzelnen Farbstoffemissionen in getrennten Punktdetektoren (PMT).

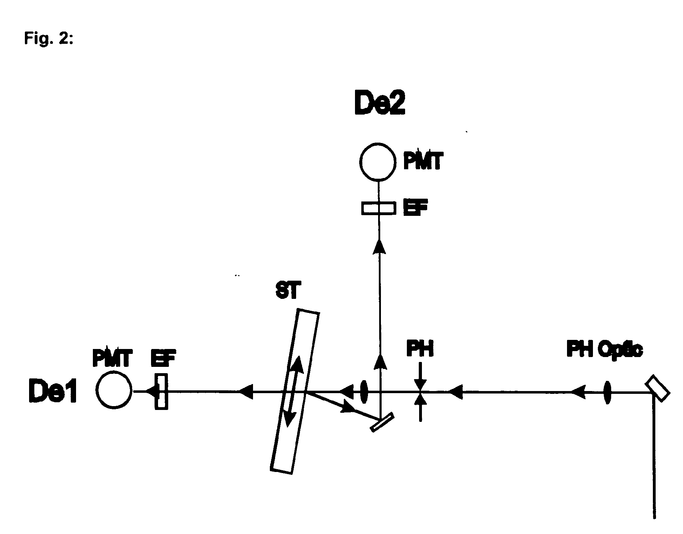

In Fig. 2 ist auszugsweise ein Teilstrahlengang in der Detektion dargestellt, bestehend aus einer Pinholeoptik mit dazwischen angeordnetem Pinhole sowie einem teildurchlässigen Strahlteiler ST zur teilweisen Transmission in Richtung eines Detektors DE1, vorzugsweise eines PMT und teilweisen Reflektion über einen Spiegeln SP in Richtung eines Detektors DE2, vorzugsweise eines PMT.
Der Strahlengang in Fig. 2 kann beispielsweise und ohne Einschränkung anstelle eines oder mehrerer Detektionsstrahlengänge in Fig. 1 treten.
Der Strahlteiler kann hierbei als 50:50 Strahlteiler ausgebildet sein, vorzugsweise jedoch auch unterschiedliche Aufteilungen in Richtung DE1 und DE2 durch entsprechende Beschichtung, beispielsweise 70:30, aber auch bis zu 99:1, aufweisen.
Besonders vorteilhaft ist der Strahlteiler ST verschieblich (durch den Pfeil dargestellt) zum Strahlengang ausgebildet und weist entlang seines Verlaufes unterschiedliche Teilungsverhältnisse, beispielsweise durch unterschiedliche Beschichtungen, auf, die diskret aber auch kontinuierlich ineinander übergehend ausgebildet sein können, so dass durch Verschieben von ST in einem Winkel zum Detektionsstrahlengang das Teilungsverhältnis kontinuierlich oder diskret je nach Applikation verändert werden kann.
Im Falle der 50:50 prozentigen Ausbildung des Strahlteilers wird entweder die Empfindlichkeit der beiden Detektoren (PMT) unterschiedlich eingestellt oder in einem der Strahlengänge zu DE1 und DE2 wird, beispielsweise durch eine Trabsmissionsverringerung, die aufgeteilte Strahlung reduziert.

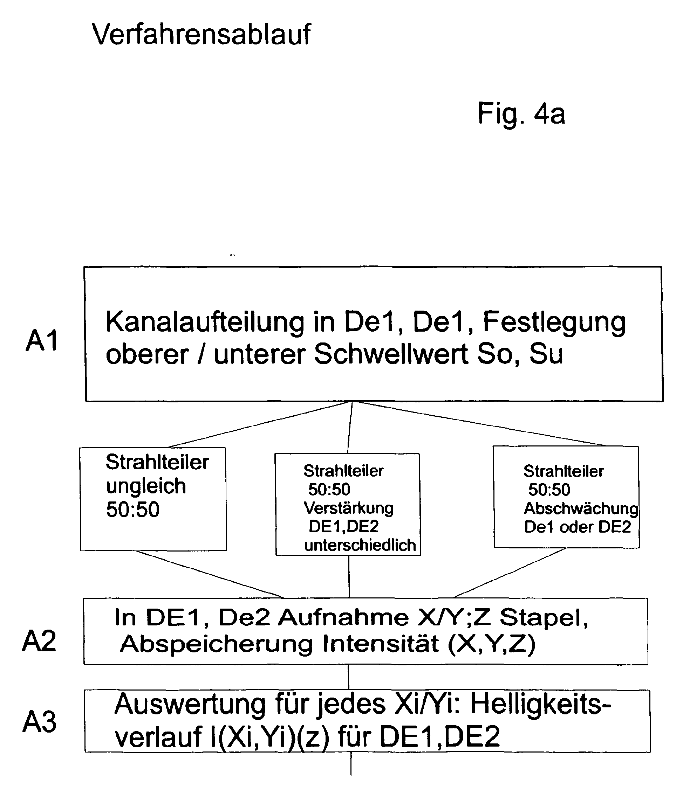

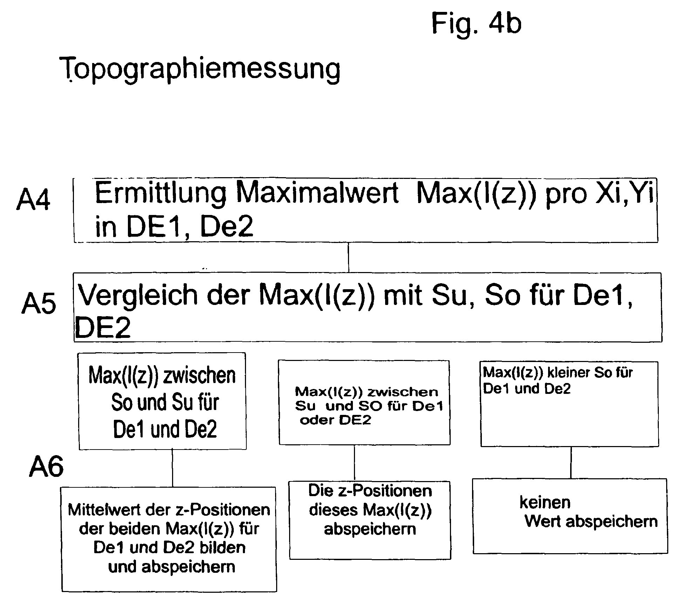

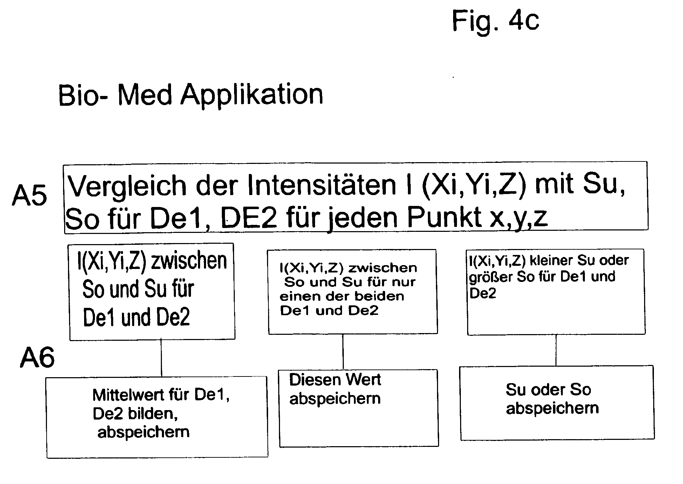

In Fig. 4 ist anhand eines Ablaufschemas dargestellt, wie die erfindungsgemäße vorteilhafte Auswertung der Detektorkanäle DE1, DE2 in Zusammenwirken mit der Probenabtastung durch das Laser- Scanning - Mikroskop erfolgt.
Bekanntlich wird durch das LSM und seine Scanner eine punktweise Abrasterung der Probe mit einem Beleuchtungsstrahl erzeugt und die diesen beleuchteten Punkten entsprechenden Reflektions- oder Fluoreszenzsignale aufgezeichnet und dem jeweiligen Bildpunkt zugeordnet, als X - und Y Werte abgespeichert,
Ein Bild besteht also aus einer abgespeicherten X/Y Detektionsverteilung.
Durch Verfahren der Probe oder des Objektives in ( vertikaler) Z Richtung werden für verschiedene z- Werte diese X/Y Bildverteilungen aufgezeichnet so dass nach Durchfahren in Z Richtung und Abrastem in X/Y eine X/Y/ Z Staple von Bildern vorliegt.
Gemäß der Darstellung in Fig. 2 erfolgt nun die Aufzeichnung parallel mit den Detektoren DE1 und DE2 so dass für diese beiden Detektionskanäle zwei getrennte, punktweise zueinander zuordenbare Bildstapel im Bildspeicher vorliegen.
Anstatt die einzelnen Messungen nacheinander stattfinden zu lassen, finden die Messungen erfindungsgemäß gleichzeitig statt. Das Detektionslicht wird dabei auf zwei verschiedene Detektoren aufgeteilt, wobei das Teilungsverhältnis stark unterschiedlich (z.B. 100 zu 1) ist. Bei geeigneter Wahl der PMT-Verstärkungen kann man nun in einem Kanal die schwachen Signalanteile deutlich sichtbar machen, erhält aber für die starken Signalanteile Überbelichtung bzw. Übersteuerung. Diese starken Signalanteile werden jedoch im zweiten Kanal korrekt gemessen, der so eingestellt ist, dass es keine Überbelichtung gibt. In einem letzten Schritt können dann die beiden Signale zusammengefasst und geeignet verrechnet werden, so dass man ein Bild mit höherer Dynamik oder ein Topographiebild mit weniger Fehlstellen erhält als jeder einzelne Detektor alleine zulassen würde.

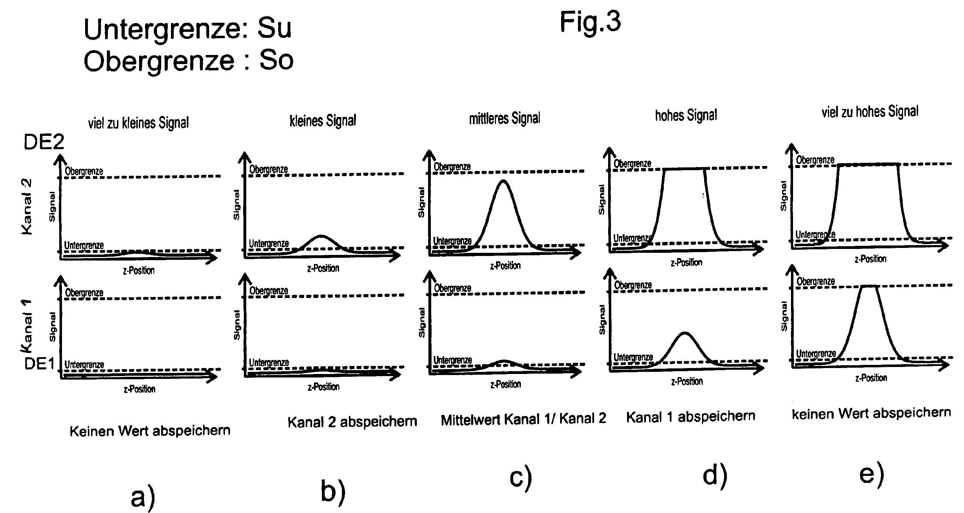

Bei der Berechnung der Topographie einer zu messenden Oberfläche wird üblicherweise folgendermaßen vorgegangen:
1) z-Stack aufnehmen, man erhält eine Vielzahl von zweidimensionalen (x/y)-Bildsignalen für die verschiedenen z-Positionen
2) für jeden x-y-Bildpunkt die Kurve Helligkeit-über-z generieren (siehe z.B. Abb.3)
3) Position des Maximums finden, dieses stellt dann die z-Position der Oberfläche am Ort x-y dar.

Bei Verwendung nur eines Detektors hat man nur den begrenzten Dynamikbereich zur Verfügung, der z.B. in Abb. 1 durch die Linien Obergrenze und Untergrenze symbolisiert ist.
Weitere Einzelheiten werden insbesondere anhand Fig. 3 und 4 näher erläutert.
Fig. 3 a-e) zeigt beispielhaft für die beiden Detektionskanäle DE1, DE2 ein X/Y Helligkeitssignal das einem Bildpunkt entspricht, entlang einer Richtung Z die durch vertikal abfolgendes Aufnehmen von Bildern (siehe oben) entstanden ist.
Dargestellt sind jeweils gesetzte Schwellwerte So und Su die vom eingesetzten Detektor abhängen, beispielsweise dem eingesetzten PMT und seinem Meßbereich. Ein relativ kleines Maximum in 3b) wird nur durch Detektor DE2 registriert, bei DE 1 liegt es unterhalb des unteren Schwellwertes Su.
In 3c wird sowohl von Detektor DE1 als auch DE2 ein Signal innerhalb der Schwellwerte registriert. In Fig.3d ist das Signal bei DE 2 so hoch dass es über dem oberen Schwellwert liegt, nur in Kanal 1 (DE1) wird ein Signal ermittelt.
In 3a wird sowohl bei DE1 als auch DE2 der untere Schwellwert unterschritten, in 3e) in beiden Kanälen der obere Schwellwert.

Die Vorgehensweise wird auch anhand des Ablaufschemas in Fig. 4 näher erläutert. Fig. 4a zeigt die gemeinsamen Schritte A1-A3 für BioMed Bildaufnahmen und Topographieaufnahmen, Fig. 4b den Ablauf bei A4-A6 bei der Topographiemessung und Fig. 4c) die Schritte A5, A6 bei der BioMed Bilderzeugung.
1. Es erfolgt eine Aufteilung des Lichts auf (mindestens) 2 Kanäle, so dass in z.B. Kanal 2 ein höheres Signal als in Kanal 1 entsteht. (Schritt A1 in Fig.4) Dafür kann( A.1 in Fig.4) z.B. das Licht mit einem Verhältnis ungleich 50:50 (z.B. 99:1) auf gleich empfindliche Detektoren aufgeteilt werden.
   a. Oder bei 50:50-Aufteilung werden die Empfindlichkeiten bzw. beim PMT die Verstärkungen der beiden Kanäle verschieden gewählt.
   b. Oder einer der beiden Kanäle wird durch einen Neutralfilter o.ä. abgeschwächt
   c. Oder es erfolgt eine Kombination aus 2 oder 3 der obigen Punkte
2. Es wird ein z-Stapel aufgenommen (Schritt A2 in Fig.4), man erhält eine Vielzahl von 2-Kanal-2D(x/y)-Bildsignalen für die verschiedenen z-Positionen
3. Für jeden Kanal DE1, DE1 wird einzeln für jeden x-y-Bildpunkt die Kurve Helligkeit-über-z generiert (Fig. 3 und A3 in Fig.4)
4. Für jeden Kanal wird für jeden x-y-Punkt die z-Position des Maximums bestimmt( A4 in Fig.4)
5.

Es erfolgt ein Vergleich der Signalkurven (Fig.3) mit den gesetzten Schwellwerten (A5 in Fig.4) und Auswahl der gültigen z-Position für den Punkt x-y nach folgendem Schema (A6 in Fig.4)
a. Nur für einen der beiden Kanäle ist das gefundene Maximum / die Intensität größer als die Untergrenze und kleiner als die Obergrenze, dann die z-Position des Maximums /der Intensität aus diesem Kanal wählen (Fig. 3b, 3d)
b. Für beide Kanäle ist das gefundene Maximum/die Intensität größer als die Untergrenze und kleiner als die Obergrenze, dann die z-Position des Maximums/ der Intensität als Mittelwert der z-Positionen der Maxima / der Intensitäten beider Kanäle wählen (Fig. 3c) Denkbar ist hier auch eine unterschiedliche Gewichtung., z.B. nach der Intensität zur Reduzierung des Signal-to-noise-ratio
c. Für keinen der beiden Kanäle ist das gefundene Maximum / die Intensität größer als die Untergrenze und kleiner als die Obergrenze (beide Kanäle übersteuert oder untersteuert) dann ist für diese x-y-Position die z-Position nicht ermittelbar (sogenanntes "void" oder "Loch") Fig. 3a,3e)

Bei geeigneter Wahl der Aufspaltung, entweder des Lichtes oder der Empfindlichkeiten, erhält man so eine höhere Gesamtdynamik. Vorteilhaft ist hier noch, dass keine Kenntnisse über den exakten Faktor der Aufspaltung oder gar eine Kalibrierung der beiden Kanäle zueinander nötig ist.

Natürlich können, wenn z.B. PMTs verwendet werden, durch eine Vorabkalibrierung und spätere geeignete Wahl der beiden PMT- Hochspannungen optimale Verhältnisse erreicht werden, um einen möglichst großen effektiven Dynamikbereich zu erhalten. Dann könnte z.B. bei Wahl der Hochspannung von Kanal 1 durch den Anwender die Hochspannung von Kanal 2 automatisch gesetzt werden.
Der Verstärkungsfaktor "gain" eines PMT ist abhängig von der angelegten Hochspannung und wird daher hier synonym verwendet.

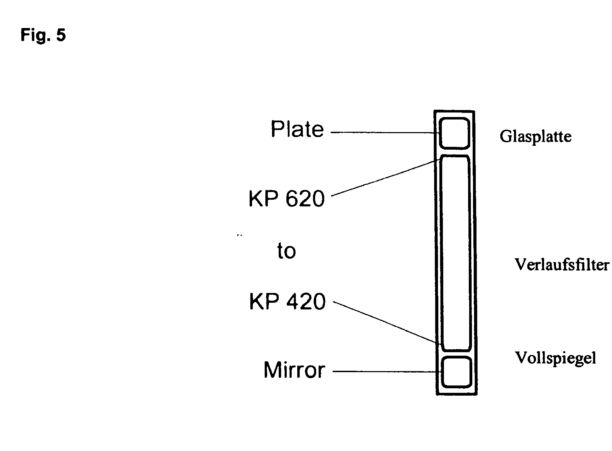

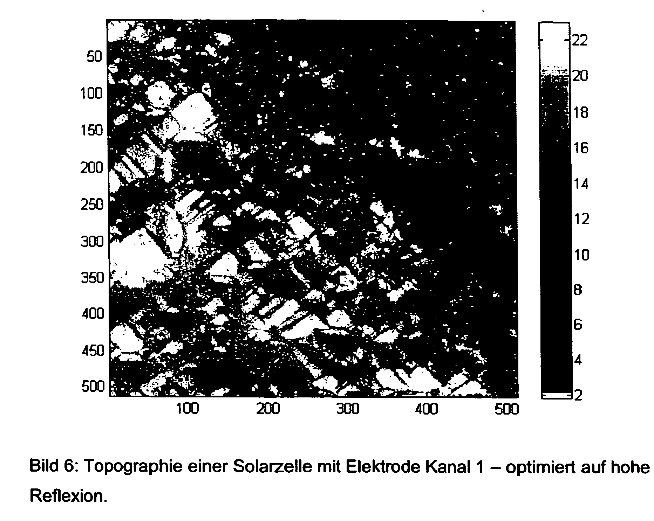

Überrraschend kann nun ein im LSM 700 vorhandener Verlaufsfilter (VSD Slide), in Fig. 5 dargestellt, auch erfindungsgemäß eingesetzt werden.
Dieser weist (siehe auch EP1882969 A1) neben einem Mittelteil mit einem variierenden spektralen Verlaufsfilter an seinem Rand eine Glasplatte (Plate) auf, die bisher eingesetzt wurde um den Verlausfilter quasi "auszuschaben". An seinem anderen Rand weist er einen Vollspiegel (Mirror) auf.
Wird nun der Verlaufsfilter im Strahlengang verschoben bis die Glaspatte in den optisch wirksamen Strahlengang gelangt kann die Glassplatte durch ihr ca. 99:1 Teilungsverhältnis überraschend als Strahlteiler ST wie in Fig. 2, 3 beschrieben eingesetzt werden.

Die Gains (Verstärkung) für die beiden Kanäle sollten so gewählt werden, dass es bei dem 1%-Kanal nicht zu Überbelichtungen kommt. Der Gain (Verstärkung) des 99%-Kanal sollte so gewählt werden, dass es genügend Voxel gibt, die in beiden Kanälen weder über- oder unterbelichtet sind.
Vorzugsweise wird zunächst ein Übersichtsbildstapel aufgenommen und die auftretende maximale und minimale Intensität bestimmt. Der Übersichtstapel kann auch mit geringerer Auflösung (weniger X/Y oder Z- Punkte werden ausgelesen erfolgen.
Bei der eigentlichen Messung wird mit beiden Kanälen gleichzeitig gemessen. Im Anschluss an die Messung findet die Verrechnung der beiden einzelnen Kanäle zu einem Kanal statt.

Bei der eigentlichen Fusion der Messdaten kann vorteilhaft zwischen BioMed- und Topographie-Auswertungen unterschieden werden. Im Folgenden werden die beiden Ansätze erläutert.

Bei BioMed-Auswertungen ist vorab eine Kalibrierung des Messsystems vorteilhaft, dies insbesondere für den eingesetzten Strahlteiler und ggf. für seine Wellenlängenabhängigkeit bzw. für die unterschiedlich eingestellte Detektorverstärkung, wobei dann die Messung wellenlängenabhängig ausgewertet wird.

Im Gegensatz zur Darstellung in Fig. 3 wird bei diesen Auswertungen in der Regel kein gemessener Wert unberücksichtigt bleiben, sondern niedrige Werte werden mit einem Faktor multipliziert damit sie in die Eremittlung eines Mittelwertes eingehen können. Bei einem Teilungsverhältnis oder einem Verstärkungsverhältnis von 99 : 1 zwischen DE1 und DE2 beispielsweise wird der Wert im Kanal DE2 mit 99 multipliziert und dann erst der Mittelwert zwischen DE1 und DE2 gebildet. Dieser Faktor kann wellenlängenabhängig eingestellt sein um für alle Wellenlängen gleiche Bildbedingungen herzustellen.

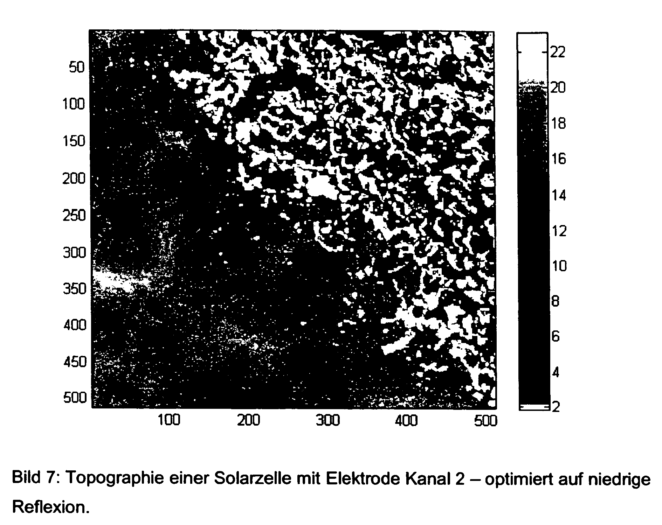

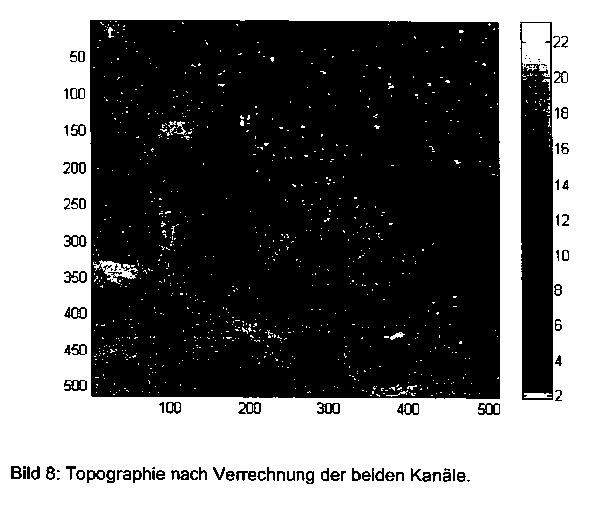

Bei Topographiemessungen erfolgt vorteilhaft die Höhenauswertung für jede xy-Koordinate separat. Die Kanalzuordnung sollte sich an der Höhenauswertung orientieren. Dieses ist in den Bildern 6-8 dargestellt.
Bild 6 wurde mit dem Kanal 1 in Fig. 2 aufgenommen und Fig. 7 mit Kanal 2.
In Fig .8 ist das verrechnete Bild dargestellt.

In Bild 6 ist die Topographie einer Solarzelle mit Pyramidenstruktur zu sehen. Im oberen rechten Bildbereich ist eine Elektrode der Solarzelle zu sehen, diese hat einen sehr hohen Reflexionsgrad im Gegensatz zur Solarzellenmatrix. Der erste Kanal wurde anhand eines Übersichtsbildes so eingestellt, dass die hellsten Reflexe auf der Elektrode innerhalb des Dynamikbereiches des PMTs liegen. Die weißen Stellen (insbesondere links unten) zeigen die Stellen an denen dennoch zu wenig (oder zuviel) Licht für eine sinnvolle Auswertung vorhanden ist.
Die Einstellung des Kanals erfolgt beispielsweise dadurch dass zusätzlich zur (beispielhaften) 99:1 Teilung zwischen Kanal 1 und 2 eine Verstärkungsänderung beispielsweise für Kanal 1 erfolgt so dass dieser Kanal beispielsweise eine 10 fach höhere Empfindlichkeit als der andere Kanal aufweist, so dass bei einem Teilungsverhältnis von 99:1 durch die Empfindlichkeitsänderung ein Verhältnis von ca. 1000 :1 zwischen beiden Kanälen eingestellt ist um möglichst viele Bildpunkte in den gültigen Bereich zwischen Su und So hineinzuziehen damit ein Bildpunkt im verrechneten Bild gebildet werden kann.

In Bild 7: Ist die Topographie der Solarzelle erneut zu sehen. Der Unterschied zwischen Bild 6 und Bild 7 ist, das mit dem zweiten Kanal gemessen wurde. Die Kanalaufteilung erfolgte über die Mirror-Position vom VSD-Slide. Der zweite Kanal wurde wie oben beschrieben so eingestellt, dass für die spätere Verrechnung ein weiter Überlappungsbereich an gültigen Pixel vorhanden ist. In Bild 7 sind die über- bzw. unterbelichteten Pixel erneut weiß gekennzeichnet. Die Messungen in beiden Kanälen fanden gleichzeitig statt.

Man sieht, dass in beiden Bildern jeweils andere Bereiche ungültig sind. In Bild 6 hauptsächlich, weil die Pixel zu dunkel waren, und in Bild 7 hauptsächlich, weil sie übersteuert waren.

In Bild 8 ist die verrechnete Topographie der beiden Kanäle zu sehen. Bei der Verrechnung wurde im gemeinsamen Gültigkeitsbereich der beiden Kanäle, der Mittelwert der beiden Höhenwerte berechnet. Wenn nur ein gültiger Höhenwert vorhanden ist, wurde dieser verwendet. Die weißen Positionen im Bild zeigen die Stellen in den auf beiden Kanälen eine Über- bzw. Unterbelichtung vorhanden ist.

Das Beispiel zeigt den Fall einer schnellen Messung und kein Szenario mit optimierten Messbedingungen. Weitere Verbesserungen sind also möglich.

## Patentansprüche

1. Verfahren zum Betrieb eines Laser - Scanning- Mikroskopes, wobei eine zweidimensionale horizontale Bildabtastung (X/Y) in mehreren Fokuspositionen oder Höhenpositionen z erfolgt und dadurch in mindestens zwei Detektionskanälen das Probenlicht detektiert und dreidimensionale Bildstapel (X,Y,Z) aufgenommen werden,
**dadurch gekennzeichnet dass**
die Aufnahme der Bildstapel simultan mit den Detektionskanälen erfolgt und dass eine ungleiche Aufteilung des Probenlichtes zwischen den Detektionskanälen erfolgt,
für einzelne Bildpunkte (X,Y) und eine zugehörige z- Position
eine bildpunktweise Verrechnung der gemessenen Intensitätswerte der Detektionskanäle erfolgt und daraus ein Probenbild erzeugt wird
indem
ein Mittelwert zwischen beiden Intensitätswerten gebildet wird, wenn beide Intensitätswerte der Detektionskanäle innerhalb eines Schwellwertbereiches des jeweiligen Detektionskanals liegen
oder
nur einer der Intensitätswerte zur Erzeugung des Probenbildes herangezogen wird, wenn nur einer der Intensitätswerte innerhalb eines Schwellwertbereiches eines Detektionskanals liegt
oder
kein Intensitätswerte zur Probenbilderzeugung herangezogen wird wenn
kein Intensitätswert innerhalb eines Schwellwertbereiches eines Detektionskanals liegt.

2. Verfahren nach Anspruch1,
wobei das Teilungsverhältnis der ungleichen Aufteilung einstellbar ist.

3. Verfahren nach Anspruch 1 oder 2, wobei zur ungleichen Aufteilung mindestens ein von der 50:50 Teilung abweichender Strahlteiler im Detektionsstrahlengang vorgesehen ist.

4. Verfahren nach einem der vorangehenden Ansprüche, wobei
ein Strahlteiler Bereiche mit unterschiedlichen Teilungsverhältnissen aufweist und im Strahlengang zur optischen Achse verschiebbar ist.

5. Verfahren nach einem der vorangehenden Ansprüche, wobei
in den Detektionskanälen PMT vorgesehen sind.

6. Verfahren nach einem der vorangehenden Ansprüche, wobei
eine Kombination der ungleichen Aufteilung und unterschiedlichen Verstärkung erfolgt.

7. Verfahren nach einem der vorangehenden Ansprüche, wobei
für die Detektionskanäle, in Abhängigkeit von der gemessenen Intensitätsverteilung eine unterschiedliche Ansteuerung der Detektorverstärkung erfolgt.

8. Verfahren nach einem der vorangehenden Ansprüche, wobei
vorzugsweise mit verringerter Auflösung, ein Übersichtsbildstapel zur Einstellung der Teilung und/ oder der Detektorverstärkung aufgenommen wird.

9. Verfahren nach einem der vorangehenden Ansprüche, wobei als Intensitätswerte Intensitätsmaxima oder Schwerpunkte der Intensitätsverteilung oder ein nach einem anderen Algorithmus zur Topographiebestimmung aus dem Intensitätsverlauf gewonnener Wert herangezogen werden.

10. Steuereinheit eines Laser- Scanning- Mikroskopes, ausgelegt um mindestens zwei Detektionskanäle auszulesen und um ein Verfahren nach einem der vorangehenden Ansprüche auszuführen.

11. Laser Scanning- Mikroskop, insbesondere zur Durchführung des Verfahrens nach einem der vorangehenden Ansprüche, das eine Steuereinheit nach Anspruch 10 mit mindestens zwei Detektionskanälen, das mindestens einen Strahlteiler mit einer von der 50:50 Aufteilung abweichenden Aufteilung des Probenlichts aufweist und/ oder bei 50:50 Aufteilung in den Detektionskanälen Detektoren mit unterschiedlich eingestellter Verstärkung aufweist oder in mindestens einem Detektionskanal bei gleicher Lichtaufteilung einen zusätzlichen Lichtabschwächer aufweist.

12. Verwendung eines Verfahrens oder Mikroskops nach einem der vorangehenden Ansprüche im Biomedbereich, insbesondere zur Detektion von Lebendzellen.

13. Verwendung eines Verfahrens oder Mikroskops nach einem der vorangehenden Ansprüche bei Topgraphiemessungen, insbesondere zur Bestimmung der Oberflächenbeschaffenheit oder eines Höhenverlaufes oder zur Rauheitsmessung.

## Claims

1. Method for operating a laser scanning microscope, wherein a two-dimensional horizontal image scanning (X/Y) is performed in a number of focus positions or height positions z and as a result the sample light is detected in at least two detection channels and three-dimensional image stacks (X, Y, Z) are recorded,
**characterized in that**
the recording of the image stacks is performed with the detection channels simultaneously and **in that** an uneven splitting of the sample light between the detection channels takes place,
for individual image points (X, Y) and an associated z position
a merger of the measured intensity values of the detection channels is performed image point by image point and a sample image is produced from it
**in that**
a mean value between the two intensity values is formed if the two intensity values of the detection channels lie within a threshold value range of the respective detection channel
or
only one of the intensity values is used for producing the sample image if only one of the intensity values lies within a threshold value range of a detection channel
or
no intensity value is used for producing a sample image if
no intensity value lies within a threshold value range of a detection channel.

2. Method according to Claim 1,
wherein the splitting ratio of the uneven splitting is adjustable.

3. Method according to Claim 1 or 2, wherein at least one beam splitter deviating from a 50:50 split is provided in the detection beam path for the uneven splitting.

4. Method according to one of the preceding claims, wherein
a beam splitter has regions with different splitting ratios and is displaceable in relation to the optical axis in the beam path.

5. Method according to one of the preceding claims, wherein
PMT are provided in the detection channels.

6. Method according to one of the preceding claims, wherein
a combination of uneven splitting and differing intensification takes place.

7. Method according to one of the preceding claims, wherein
depending on the measured intensity distribution, the detector gain is set differently for the detection channels.

8. Method according to one of the preceding claims, wherein
an overview image stack is recorded, preferably with reduced resolution, for the adjustment of the splitting and/or the detector gain.

9. Method according to one of the preceding claims, wherein intensity maxima or centroids of the intensity distribution or a value obtained from the intensity curve on the basis of some other algorithm for topography determination are used as intensity values.

10. Control unit of a laser scanning microscope, designed to read at least two detection channels and to carry out a method according to one of the preceding claims.

11. Laser scanning microscope, in particular for carrying out the method according to one of the preceding claims, which has a control unit according to Claim 10 with at least two detection channels, which has at least one beam splitter with a splitting of the sample light deviating from the 50-50 split and/or, in the case of a 50-50 split, has in the detection channels detectors with a differently adjusted gain or, in the case of an even light split, has an additional light attenuator in at least one detection channel.

12. Use of a method or microscope according to one of the preceding claims in the biomedical area, in particular for the detection of live cells.

13. Use of a method or microscope according to one of the preceding claims in topography measurements, in particular for determining the surface finish or a height profile or for roughness measurement.

## Revendications

1. Procédé de mise en fonctionnement d'un microscope à balayage laser, dans lequel un balayage d'image bidimensionnel horizontal (X/Y) est effectué à plusieurs positions de focalisation ou à plusieurs positions en hauteur z, cela permettant de détecter la lumière d'échantillon dans au moins deux canaux et d'acquérir des empilements tridimensionnels d'images (X, Y, Z),
**caractérisé en ce que** l'acquisition des empilements d'images est effectué à l'aide des canaux de détection et **en ce qu'**une répartition inégale de la lumière d'échantillon entre les canaux de détection est effectuée,
**en ce que**, pour des pixels individuels (X, Y) et une position z correspondante, une compensation ponctuelle des valeurs d'intensité mesurées des canaux de détection est effectuée et une image d'échantillon est générée à partir de ceux-ci,
en déterminant une valeur moyenne entre les deux valeurs d'intensité lorsque les deux valeurs d'intensité des canaux de détection se situent à l'intérieur d'un domaine de valeurs de seuil du canal de détection respectif, ou
en n'utilisant que l'une des valeurs d'intensité pour générer l'image d'échantillon lorsqu'une seule des valeurs d'intensité se situe à l'intérieur d'un domaine de valeurs de seuil d'un canal de détection,
ou en n'utilisant aucune valeur d'intensité pour générer l'image d'échantillon lorsqu'aucune valeur d'intensité ne se situe à l'intérieur d'un domaine de valeurs de seuil d'un canal de détection.

2. Procédé selon la revendication 1,
dans lequel le rapport de division de la répartition inégale est réglable.

3. Procédé selon la revendication 1 ou 2,
dans lequel il est prévu au moins un diviseur de faisceau sur le chemin du faisceau de détection, qui s'écarte de la division de 50:50 afin de produire une répartition inégale.

4. Procédé selon l'une quelconque des revendications précédentes,
dans lequel un diviseur de faisceaux comporte des domaines ayant des rapports de division différents et peut être déplacé par rapport à l'axe optique dans le chemin de faisceau.

5. Procédé selon l'une quelconque des revendications précédentes,
dans lequel il est prévu des PMT dans les canaux de détection.

6. Procédé selon l'une quelconque des revendications précédentes,
dans lequel une combinaison de la répartition inégale et d'une amplification différente est effectuée.

7. Procédé selon l'une quelconque des revendications précédentes,
dans lequel une commande différente de l'amplification des détecteurs est effectuée pour les canaux de détection en fonction de la répartition d'intensité mesurée.

8. Procédé selon l'une quelconque des revendications précédentes,
dans lequel un empilement d'images d'aperçu destiné à régler la division et/ou l'amplification des détecteurs est acquis, de préférence avec une plus faible résolution.

9. Procédé selon l'une quelconque des revendications précédentes,
dans lequel des maxima d'intensité ou des barycentres de la répartition d'intensité ou une valeur obtenue à partir du profil d'intensité conformément à un autre algorithme de détermination de topographie sont utilisés en tant que valeurs d'intensité.

10. Unité de commande d'un microscope à balayage laser, configuré pour lire au moins deux canaux de détection et pour mettre en oeuvre un procédé selon l'une quelconque des revendications précédentes.

11. Microscope à balayage laser, notamment destiné à mettre en oeuvre le procédé selon l'une quelconque des revendications précédentes, qui comporte une unité de commande selon la revendication 10 ayant au moins deux canaux de détection, qui comporte au moins un diviseur de faisceau ayant une répartition de la lumière d'échantillon s'écartant de la répartition 50:50 et/ou qui comporte des détecteurs dans les canaux de détection ayant une amplification réglée de manière différente lors d'une répartition 50:50 ou qui comporte dans au moins un canal de détection, lors d'une répartition égale de la lumière, un atténuateur de lumière supplémentaire.

12. Utilisation d'un procédé ou d'un microscope selon l'une quelconque des revendications précédentes dans le domaine biomédical, notamment pour la détection de cellules vivantes.

13. Utilisation d'un procédé ou d'un microscope selon l'une quelconque des revendications précédentes lors de mesures de topographie, notamment pour déterminer l'état superficiel ou un profil de hauteur ou à des fins de mesure de rugosité.
